# EUROPEAN PATENT SPECIFICATION

(11) **EP 2 588 958 B1**
(45) Date of publication and mention of the grant of the patent: **06.11.2019**
(21) Application number: 11804047.6
(22) Date of filing: 22.06.2011
(51) Int. Cl.: G06F 9/46, G06F 9/38, G06F 1/32, G06F 9/30, G06F 9/48

(54) **APPARATUS, METHOD, AND SYSTEM FOR IMPROVING POWER PERFORMANCE EFFICIENCY BY COUPLING A FIRST CORE TYPE WITH A SECOND CORE TYPE**
VORRICHTUNG, VERFAHREN UND SYSTEM ZUR ERHÖHUNG EINER ENERGIELEISTUNGSEFFIZIENZ DURCH KOPPLUNG EINES ERSTEN KERNTYPS MIT EINEM ZWEITEN KERNTYP
APPAREIL, PROCÉDÉ ET SYSTÈME POUR AMÉLIORER LE RENDEMENT PERFORMANCES/PUISSANCE PAR COUPLAGE D'UN PREMIER TYPE DE COEUR À UN SECOND TYPE DE COEUR

(30) Priority: 29.06.2010 US 826107
(43) Date of publication of application: 08.05.2013
(73) Proprietor: Intel Corporation, Santa Clara, CA 95054 (US)
(72) Inventor: WU, Youfeng, Palo Alto, California 94306 (US); HU, Shiliang, San Jose, CA 95131-3600 (US); BORIN, Edson, San Jose, California 95134 (US); WANG, Cheng, C., San Ramon, California 94582 (US); BRETERNITZ, Mauricio, Jr., Austin, Texas 78759 (US); LIU, Wei, San Jose, California 95120 (US)
(74) Representative: Goddar, Heinz J.
(86) International application number: PCT/US2011/041429
(87) International publication number: WO 2012/005949

(56) References cited:
- US-A1- 2002 066 081
- US-A1- 2004 215 987
- US-A1- 2006 095 807
- US-A1- 2006 123 397
- US-A1- 2007 079 296
- US-A1- 2008 244 538
- US-A1- 2008 263 324
- US-A1- 2009 150 335
- US-B1- 6 681 387

## Description

### FIELD

This invention relates to the field of processors and, in particular, to optimizing power, performance efficiency.

### BACKGROUND

Advances in semi-conductor processing and logic design have permitted an increase in the amount of logic that may be present on integrated circuit devices. As a result, computer system configurations have evolved from a single or multiple integrated circuits in a system to multiple cores, multiple hardware threads, and multiple logical processors present on individual integrated circuits. A processor or integrated circuit typically comprises a single physical processor die, where the processor die may include any number of cores, hardware threads, or logical processors.

The ever increasing number of processing elements-cores, hardware threads, and logical processors on integrated circuits enables more tasks to be accomplished in parallel. However, processors that employ all out-of-order cores may lead to power inefficiencies and/or performance inefficiencies under some circumstances. As a result, some hardware-software co-designed systems have been developed to confront the power-performance efficiency problem. In that system, a wide, simple in-order processor may be utilized, while software optimizes and schedules programs to run on the in-order hardware efficiently.

Yet, hardware-software co-designed systems are typically associated with two adverse impacts: (1) translation and/or optimization of code utilizing a binary translator may slow down some applications with short running tasks and small response-time constraints (a binary translation glassjaw); and (2) an in-order processor may not perform well for some styles of programs that are better suited for parallel execution (an in-order glassjaw).

To illustrate the binary translation (BT) glassjaw issue, an example of a typical profile for execution of a Microsoft Excel application is examined. For 10 billion dynamic x86 instructions executed, simulation illustrates that 23% of dynamic instructions are from static instructions, which are repeated less than 100,000 times; this may be referred to as cold code. If these x86 instructions are interpreted and translated using binary translation software (with the typical overhead for translation/interpretation and performance gain with optimizations), the cold code will take approximately 3.6× more instructions to run than native x86 execution. And, the translation causes the entire 10B instructions to execute 1.4× more instructions. Taking into account an approximation of 25% of executed code is cold code, then on average, translation overhead will make the cold code to run 4.4× slower. And cause the whole execution to run 1.7× slower than the native execution.

To illustrate the in-order glassjaw, an example with performance of an in-order processor as compared to an out-of-order processor during benchmark simulation is examined. During the simulation of a number of programs on similar equipped in-order and out-of-order (OOO) processors, it was seen that approximately 40% of programs ran 1.57× faster on the OOO processor, while approximately 40% of programs ran 1.45× faster on the in-order processor. Although these simulations are purely illustrative and may vary in results, they illustrate that both systems potentially include inefficiencies in power and/or performance.

US 2006/095807 A1 discloses a method and apparatus for changing the configuration of a multi-core processor is disclosed. In one embodiment, a throttle module (or throttle logic) may determine the amount of parallelism present in the currently-executing program, and change the execution of the threads of that program on the various cores. If the amount of parallelism is high, then the processor may be configured to run a larger amount of threads on cores configured to consume less power. If the amount of parallelism is low, then the processor may be configured to run a smaller amount of threads on cores configured for greater scalar performance

US 6,681,387 B1 discloses a method and apparatus for detecting and monitoring program hot spots during execution that may be implemented in hardware. A hot spot detector tracks branch instructions which are retired. Frequently executed branch instruction addresses within a particular interval are designated as hot spot candidates. A hot spot detection counter is used to track non-hot spot branches and hot spot candidate branches. When hot spot candidate branches are frequently encountered compared to non-hot spot candidate branches, the hot spot detector may notify the operating system and hot spot candidate branch addresses may be supplied to a runtime optimizing compiler and a monitor table or a hot spot monitor. The hot spot monitor may disable the hot spot detector when a program is operating in known hot spots and may enable the hot spot detector if the program has strayed from known hot spots.

US 2004/215987 A1 discloses a computer system for conserving operating power includes a number of computer hardware processor cores that differ amongst themselves in at least in their respective operating power requirements and processing capabilities. A monitor gathers performance metric information from each of the computer hardware processor cores that is specific to a particular run of application software then executing. A workload transfer mechanism transfers the executing application software to a second computer hardware processor core in a search for reduced operating power. A transfer delay mechanism is connected to delay a subsequent transfer of the executing application software if the system operating power may be conserved by such delay.

US 2008/263324 A1 discloses that a system includes a first asymmetric core, a second asymmetric core, and a core switching module. The first asymmetric core executes an application when the system operates in a first mode and is inactive when the system operates in a second mode. The second asymmetric core executes the application when the system operates in the second mode. The core switching module switches operation of the system between the first mode and the second mode. The core switching module selectively stops processing of the application by the first asymmetric core after receiving a first control signal. The core switching module transfers a first state of the first asymmetric core to the second asymmetric core. The second asymmetric core resumes executing the application in the second mode.

US 2002/066081 A1 discloses a system and method for growing a hot trace in a program during the program's execution in a dynamic translator, comprising the steps of: identifying an initial block as the first block in a trace to be selected; until an end-of-trace condition is reached, applying static branch prediction rules to the terminating branch of a last block in the trace to identify a next block to be added to the selected trace; and adding the identified next block to the selected trace.

### BRIEF DESCRIPTION OF THE DRAWINGS

The present invention is illustrated by way of example and not intended to be limited by the figures of the accompanying drawings.
Figure 1 illustrates an embodiment of a processor including two asymmetric cores.
Figure 2 illustrates an embodiment of a processor including a native core, a software-managed core, and a code distribution module
Figure 3 illustrates an embodiment of a processor for distributing code among cores to achieve maximum performance and maximum power savings.
Figure 4 illustrates an embodiment of a flow diagram for a method of distributing code among an out-of-order core and an in-order core to achieve maximum performance and power savings.
Figure 5 illustrates another embodiment of a flow diagram for a method of distributing code among an out-of-order core and an in-order core to achieve maximum performance and power savings.

### DETAILED DESCRIPTION

The invention is defined by the independent claims. Particular embodiments are defined by the subject-matter of the dependent claims. Embodiments which do not fall within the scope of the claims are to be interpreted merely as examples useful for understanding the invention.

In the following description, numerous specific details are set forth such as examples of specific types of processor cores, specific processor configurations, specific hot code region identification algorithms, specific structures for storing translated/optimized code, specific division of tasks between hardware/software, specific processor units/logic, etc. in order to provide a thorough understanding of the present invention. It will be apparent, however, to one skilled in the art that these specific details need not be employed to practice the present invention. In other instances, well known components or methods, such as specific and alternative processor architecture, specific logic circuits/code for described algorithms, specific code implementations, specific binary translation details, and other specific operational details of microprocessors haven't been described in detail in order to avoid unnecessarily obscuring the present invention.

The method and apparatus described herein are for implementing a native core with a software-managed core to achieve maximum performance and power savings. Specifically, the collaboration between cores is discussed primarily in reference to an out-of-order core and an in-order, co-designed core. Yet, the apparatus' and methods described herein are not so limited, as they may be implemented in any distribution of code between asymmetric cores. For example, the code distribution methods and apparatus' described herein may be utilized with two out-of-order cores that implement unique Instruction Set Architectures (ISAs). Furthermore, the collaboration between such cores is often discussed as split between hardware mechanisms and code/software. However, any blend or exclusive use of hardware, software, and/or firmware my be utilized to implement the methods and apparatus' described below.

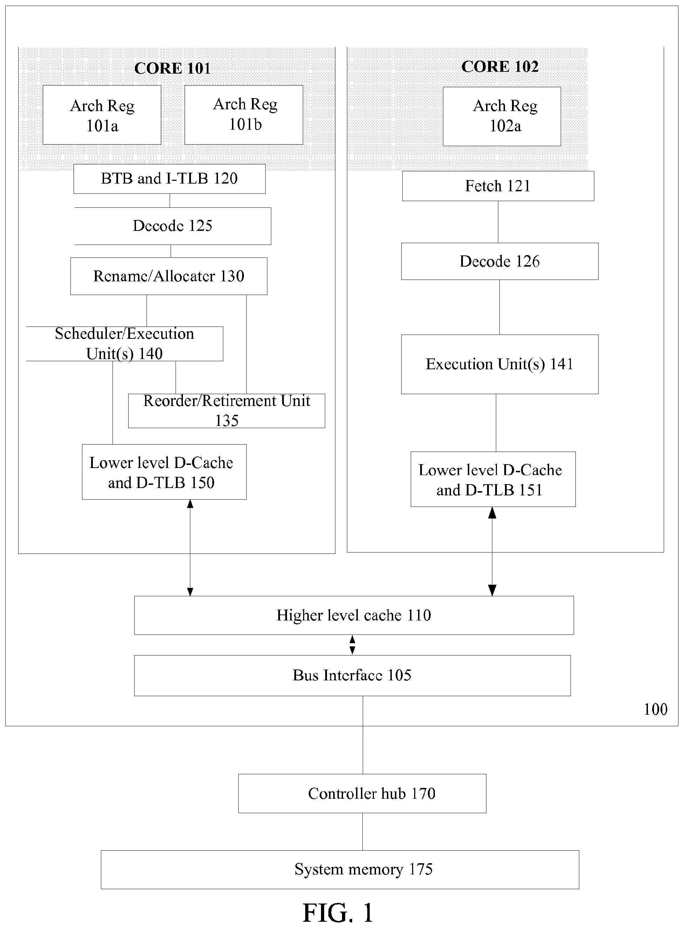

Referring to **Figure 1****,** an embodiment of a processor including multiple cores is illustrated. Processor **100** includes any processor, such as a microprocessor, an embedded processor, a digital signal processor (DSP), a network processor, or other device to execute code. Processor **100,** in one embodiment, includes at least two cores core **101** and **102** of different types. However, processor **100** may include any number of processing elements.

In one embodiment, a processing element refers to a thread unit, a thread slot, a process unit, a context, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor typically refers to an integrated circuit, which potentially includes any number of other processing elements, such as cores or hardware threads.

A core often refers to logic located on an integrated circuit capable of maintaining an independent architectural state wherein each independently maintained architectural state is associated with at least some dedicated execution resources. In contrast to cores, a hardware thread typically refers to any logic located on an integrated circuit capable of maintaining an independent architectural state wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical processor **100,** as illustrated in **Figure 1****,** includes two cores, core **101** and **102.** Here, core **101** and **102** are considered asymmetric cores, i.e. cores with different configurations, functional units, and/or logic. In one embodiment, core **101** includes an out-of-order processor core, while core **102** includes an in-order processor core. However, cores **101** and **102** may be individually selected from any type of core, such as a native core, a software managed core, a core adapted to execute a native Instruction Set Architecture (ISA), a core adapted to execute a translated Instruction Set Architecture (ISA), a co-designed core, or other known core. Yet to further the discussion, the functional units illustrated in **Figure 1** are described in further detail below.

As depicted, core **101** includes two hardware threads **101a** and **101b,** which may also be referred to as hardware thread slots **101a** and **101b.** In contrast, core **102** includes one hardware thread **102a.** Therefore, software entities, such as an operating system, in one embodiment potentially view processor **100** as three separate processors, i.e. three logical processors or processing elements capable of executing three software threads concurrently. Alternatively, a software entity may only view processor **100** as having two separate processors-thread slots **101a** and **101b** while the described code distribution mechanisms manage execution of code on core **102.**

As eluded to above, a first thread is associated with architecture state registers **101a,** a second thread is associated with architecture state registers **101b,** and a third thread may be associated with architecture state registers **102a.** As illustrated, architecture state registers **101a** are replicated in architecture state registers **101b,** so individual architecture states/contexts are capable of being stored for logical processor **101a** and logical processor **101b.** Architecture state registers **102a** may be the same as registers **101a, 101b.** Or registers **102a** may instead be unique to the architecture of core **102.** In core **101,** other smaller resources, such as instruction pointers and renaming logic in rename allocater logic **130** may also be replicated for threads **101a** and **101b.** Some resources, such as re-order buffers in reorder/retirement unit **135,** ILTB **120,** load/store buffers, and queues may be shared through partitioning. Other resources, such as general purpose internal registers, page-table base register, low-level data-cache and data-TLB **115,** execution unit(s) **140,** and portions of out-of-order unit **135** are potentially fully shared.

Processor **100** often includes other resources, which may be fully shared, shared through partitioning, or dedicated by/to processing elements. In **Figure 1****,** an embodiment of a purely exemplary processor with illustrative logical units/resources of a processor is illustrated. Note that a processor may include, or omit, any of these functional units, as well as include any other known functional units, logic, or firmware not depicted. As illustrated, core **101** is illustrated as a simplified out-of-order (OOO) processor core. The OOO core includes a branch target buffer **120** to predict branches to be executed/taken and an instruction-translation buffer (I-TLB) **120** to store address translation entries for instructions.

Core **101** further includes decode module **125** coupled to fetch unit **120** to decode fetched elements. Fetch logic, in one embodiment, includes individual sequencers associated with thread slots **101a, 101b,** respectively. Usually core **101** is associated with a first Instruction Set Architecture (ISA), which defines/specifies instructions executable on processor **100.** Here, often machine code instructions that are part of the first ISA include a portion of the instruction (referred to as an opcode), which references/specifies an instruction or operation to be performed. Decode logic **125** includes circuitry that recognizes these instructions from their opcodes and passes the decoded instructions on in the pipeline for processing as defined by the first ISA.

In one example, allocator and renamer block **130** includes an allocator to reserve resources, such as register files to store instruction processing results. However, threads **101a** and **101b** are potentially capable of out-of-order execution, where allocator and renamer block **130** also reserves other resources, such as reorder buffers to track instruction results. Unit **130** may also include a register renamer to rename program/instruction reference registers to other registers internal to processor **100.** Reorder/retirement unit **135** includes components, such as the reorder buffers mentioned above, load buffers, and store buffers, to support out-of-order execution and later in-order retirement of instructions executed out-of-order.

Scheduler and execution unit(s) block **140,** in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, an integer execution unit, a jump execution unit, a load execution unit, a store execution unit, and other known execution units.

Lower level data cache and data translation buffer (D-TLB) **150** are coupled to execution unit(s) **140.** The data cache is to store recently used/operated on elements, such as data operands, which are potentially held in memory coherency states. The D-TLB is to store recent virtual/linear to physical address translations. As a specific example, a processor may include a page table structure to break physical memory into a plurality of virtual pages.

As stated above, in one embodiment, core **102** includes an in-order, co-designed core. As a result, **Figure 1** illustrates a simplified pipeline of an in-order core. This pipeline includes fetch unit **121,** decode unit **126,** execution unit(s) **141,** and a lower-level data cache **151.** These units may work in a similar manner to the corresponding units in core **101.** Yet, in an in-order core, the instructions/operations are executed in program order, instead of potential out-of-order execution as in core **101.** In one example, out-of-order core **101** is referred to as the native core, while the in-order core **102** is referred to as a co-designed core. Alternatively, in-order core **102** is the native core and out-of-order core **101** is the co-designed core.

Here, cores **101** and **102** share access to higher-level or further-out cache **110,** which is to cache recently fetched elements. Note that higher-level or further-out refers to cache levels increasing or getting further way from the execution unit(s). In one embodiment, higher-level cache **110** is a last-level data cache last cache in the memory hierarchy on processor **100** such as a second or third level data cache. However, higher level cache **110** is not so limited, as it may be associated with or include an instruction cache. A trace cache-a type of instruction cache-instead may be coupled after decoder **125** to store recently decoded traces.

In the depicted configuration, processor **100** also includes bus interface module **105** to communicate with devices external to processor **100,** such as system memory **175,** a chipset, a northbridge, or other integrated circuit. Memory **175** may be dedicated to processor **100** or shared with other devices in a system. Common examples of types of memory **175** include dynamic random access memory (DRAM), static RAM (SRAM), non-volatile memory (NV memory), and other known storage devices.

In one embodiment, code is distributed between core **101** and **102** based on maximizing performance and power. For example, code regions are identified to perform better on one of the two cores **101, 102.** As a result, when one of such code regions is encountered/detected, that code section is distributed to the appropriate core. Identification of such regions may be done statically (before execution of the code, such as through program profile analysis) or dynamically (during execution of the code) by hardware, software, or a combination thereof.

In one illustrative example of a dynamic approach, one processor core, such as core **101,** may be selected as a default core to execute code based on its performance, power-savings, native ISA, any other known processing consideration, or a combination thereof. Then, regions of the default code that execute poorly on core **101,** or would execute better on core **102,** are identified. Upon subsequently encountering those identified code sections, they are distributed to core **102** for execution. Note that execution of those regions on core **102** may include speculative, run-ahead execution to warm-up core **101,** serial execution of those regions on core **102** with execution of other regions on core **101** that depend on results from those regions, or parallel, concurrent execution of those regions with execution of other code on core **102.**

In an example of a static approach, a compiler or user may identify sections of code, such as with instructions or demarcations, that execute better on one core or the other. Here, core **101** executes code until such an instruction is encountered. Either in response to monitoring from core **102** or by sole initiative (triggering) of core **102,** the identified code section is then executed on core **102** based on the encountered instruction.

Whether identification of code sections to run better on one core or another is done dynamically or statically, in some embodiments, native code is translated and/or optimized to be run on another core. For example, assume core **101** includes decode logic **125** that recognizes a first ISA type, and core **102** includes decode logic **126** that recognizes a second ISA type. In this case, if a code region of the first ISA type is to be executed on core **102,** then the code region is translated to the second ISA type to be executed on core **102.** Note that translation between ISA types is purely illustrative. Instead, out-of-order optimized code to be executed on core **101** may be re-optimized for execution of in-order core **102.** In this scenario, core **102** may include the same, or a subset of, the same ISA as core **101.** Yet, optimizations are performed on the code to ensure it runs more efficiently on a simple, wide in-order core.

The collaboration between core **101** and core **102** to distribute code efficiently may be implemented in hardware, firmware, software, or a combination thereof. The example above regarding a dynamic approach to identifying code regions is further examined to illustrate exemplary embodiments of collaboration mechanisms. In the example, program code, in a native format, is optimized to execute on out-of-order core **101.** During execution of a code region or the program code, monitor hardware associated with core **101** and/or core **102** may be utilized to determine the performance associated with core **101's** execution of the code region. Alternatively, code, such as software, OS code, micro-code, or other code, may be executed on core **102,** to determine/monitor the performance of core **101** in executing the code region. If it's determined that the code region would be better executed on core **102,** then hardware, software, firmware, or a combination thereof may be utilized to translate and/or optimize the code region to be executed on core **102.**

As a result, when core **101** encounters the code region again-an instruction pointer references the code region, an identifier instruction to identify the code region is fetched or decoded, or another way of identifying a code region is detected then the translated/optimized version of the code region is executed on core **102.** In one embodiment, during execution of the code region on core **102,** core **101** may concurrently execute other code regions to increase overall program execution performance. Note that concurrent or parallel execution may include execution of separate software threads on cores **101, 102** as well.

In contrast, threads may be pipelined on cores **101, 102.** As an example of this scenario, assume each of the two software threads includes multiple stages of code (hot, cold, etc). Here, cold code from a first thread may be executed on core **101,** and when a hot region is encountered, a translated hot region is executed on core **102.** During execution of the translated hot region of code on core **102,** cold code from the second thread may be executed on core **101.** On core **102,** when execution of the first translated hot code completes, execution of another hot region from the second software thread may then be executed. As can be seen from this example, the stages of code may be interleaved on each core resulting in a pipelined type of execution. In another embodiment, code may be executed sequentially with respect to the two cores, such as a code region on core **101,** the identified code region on core **102,** and then subsequently another code region on core **101.**

In addition, even when a code region is initially identified for execution on core **102,** the performance of that execution may also be monitored. The performance on both cores may then be taken into account in determining which core is best suited to execute the code region to achieve maximum performance and power savings. For example, if a code region is identified to be executed as translated code on core **102,** but the performance on core **102** is below the performance on core **101** (or the performance gain on core **102** doesn't outweigh the power savings of execution on core **201**), then the code may be re-distributed to core **101** upon subsequent encounters.

**Figure 1** illustrates an abstracted, logical view of an exemplary processor with a representation of different modules, units, and/or logic. However, note that a processor utilizing the methods and apparatus' described herein need not include the illustrated units. And, the processor may omit some or all of the units shown. Furthermore, a majority of the discussion above has been in reference to an out-of-order processor core and an in-order processor core. However, as aforementioned, the two processor cores may be any version of asymmetric cores, such as a native core and a software managed core. In addition, **Figure 1** only depicts two cores; yet, a processor may include any number of cores, such as multiple cores of the same type, as well as more than two cores that each differ in type.

**Figure 1** also illustrates an embodiment of processor that is coupled in a point-to-point fashion with an interface to an external memory controller (controller hub **170**). However, many current processors have begun including an on-processor memory interface module an on-chip module with a ring configuration to interconnect multiple cores, as well as shared caches and other interfaces. Although not illustrated, processor **100,** in one embodiment, includes a ring interconnect coupling core, cache, and memory controller components.

Here, caching agents are utilized to manage a slice of a physically distributed cache. As an example, each cache component is to manage a slice of a cache for a collocated core a core the cache agent is associated with for purpose of managing the distributed slice of the cache. Much like cache agents handle traffic on a ring interconnect and interface with cache slices, core agents/components are to handle traffic and interface with cores. Additionally, the ring interconnect may couple Memory Controller Interface Logic (MCIL) and/or other controllers to interface with other modules, such memory and/or a graphics processor.

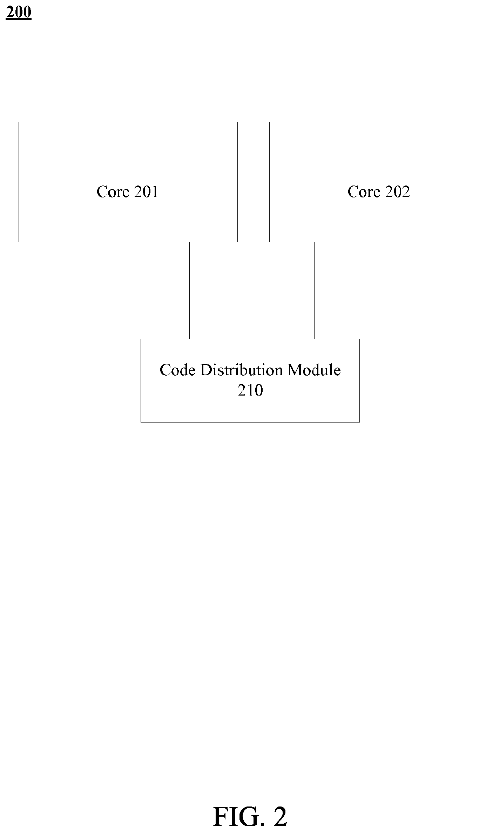

Referring to **Figure 2** an embodiment of a code distribution module to distribute code among two cores is illustrated. In one embodiment, cores **201, 202** are asymmetric cores. For example, core **201** is an out-of-order (OOO) core adapted to execute code out of original program order, and core **202** is an in-order (or serial core) adapted to execute code in program order. A non-exhaustive exemplary list of other core types include: a native core, a non-native core, a software managed core, a native ISA core, a translated ISA core, a co-designed core, a speculative execution core, and a non-speculative execution core.

In one embodiment, code distribution module **210** is to distribute code between core **201** and **202** based on maximizing performance and power savings. A module as used herein may refer to hardware, software, firmware, or a combination thereof. Additionally, a module, unit, or logic may be centralized in a core or processor, as well as distribute throughout. For example, code distribution module **210** may include distribution code, such as micro-code or software, held in storage associated with core **201,** core **202,** processor **200,** or a system including processor **200.** Here, the distribution code, when executed, is to perform the code distribution. In contrast, the code distribution process may be managed by hardware, software, firmware, or a combination thereof.

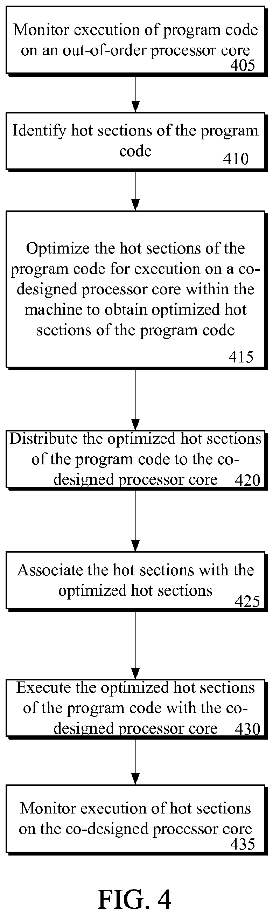

In one embodiment, code distribution module **210** is to identify a hot portion of program code. Program code is discussed in more detail below in reference to **Figure 4****.** However, as an illustrative example for this section of discussion, program code may include any code to be executed with a processing element, such as binary or machine code. A hot portion of code may refer to a portion of code that is better suited to execute on one core over the other based on considerations, such as power, performance, heat, other known processor metric(s), or a combination thereof. Here, assuming core **201** is a default core for native execution of the program code, then identification of a hot portion of the program code includes determining a portion of code that is better suited to be executed on core **202.** In the embodiment where core **201** is an OOO core and core **202** is an in-order core, then a hot portion of code may refer to a hot spot of the program code that is better suited to be executed on serial core **202,** which potentially has more available resources for execution of a highly-recurrent section. As an example, a hot portion of code is identified by a recurrence pattern of the portion of code, or some other known metric, such as instruction count or cycle count. Often a section of code with a high-recurrence pattern may be optimized to be executed more efficiently on an in-order core. Essentially, in this example, cold code (low-recurrence) is distributed to native, OOO core **101,** while hot code (high-recurrence) is distributed to software-managed, in-order core **102.**

A hot portion of code may be identified statically, dynamically, or a combination thereof. In the first case, a compiler or user may determine a section of program code is hot code. Here, a hot code identifier instruction(s) may demarcate a section of code as hot, i.e. to be executed on core **202** instead of on core **101.** Decode logic in core **201,** in one embodiment, is adapted to decode a hot code identifier instruction from the program code, which is to identify the hot portion of the program code. The fetch or decode of such an instruction may trigger translation and/or execution of the hot section of code on core **202.** In this example, the code distribution module **210** includes the decode logic to detect the hot code detection instruction. And module **210** may also include other hardware and/or software to carry out the translation/optimization, as well as the execution of the hot code on core **202.** Alternatively, the hot-code section may be pre-optimized/translated for execution on core **202.**

In another example, code distribution module **210** dynamically (during execution) identifies hot spots/regions in program code. In one embodiment, hardware included in core **201** and/or core **202** is utilized to profile execution of the program code on a core, such as core **201.** Based on the characteristics of the profile power and/or performance metrics associated with execution a region of the program code may be identified as hot code. Similar to the operation of hardware, monitoring code may be executed on one core, such as core **202,** to perform the monitoring/profiling of program code being executed on the other core, such as core **201.** Note that such monitoring code may be code held in storage structures within the cores, within processor **200,** or held in a system including processor **200.** For example, the monitoring code may be microcode, or other code, held in storage structures of core **201,** core **202,** or processor **200.** And, the monitoring code may be executed by traditional execution units, as well as other firmware or logic on processor **200.**

As yet another example, a static identification of hot code is made as a hint. But dynamic profiling of the program code execution is able to ignore the static identification of a region of code as hot; this type of static identification is often referred to as a compiler or user hint that dynamic profiling may take into account in determining which core is appropriate for code distribution. Moreover, as is the nature of dynamic profiling, identification of a region of code as hot doesn't restrict that section of code to always being identified as hot. For example, assume program code is being executed on an out-of-order core **201.** Monitor code executing on core **202** monitors the performance level of core **201's** execution of a section of the program code. Based on the implementation, if the performance on core **201** is determined to be enough lower than it would perform on core **202** and/or a recurrence pattern of the code section on core **201** is high-enough to be predicted to hide core transition overhead; then the code section is identified as hot. After translation and/or optimization, a translated version of the code section is executed on core **202.** Similar to the monitoring of execution on core **201,** the execution of the translated version of code may be monitored on core **202,** such as through execution of the performance monitoring code. If the performance is lower on core **202** than on core **201,** then the identification of the code section as hot may be dynamically reversed (the section of hot code may be relabeled as cold code).

Once a section, spot, or region of codes is identified as hot, code distribution module **210,** in one embodiment, optimizes and/or translates the hot section of code to obtain optimized/translated hot code. In one embodiment, translation and/or optimization code, such as binary translation code, is held in storage logic of core **202.** As an example, the binary translation code may be part of micro-code held in core **202.** The translation/optimization code, when executed, translates/optimizes the code section for execution on core **202.** In one embodiment, core **201, 202** may recognize the same ISA, or a subset thereof, where translation/optimization is merely translating/optimizing code to execute more efficiently on core **202.** In another embodiment, core **201, 202** recognize different ISAs, where translation includes translating the code region from one ISA recognizable by core **201** to another ISA recognizable by core **202.** Although translation/optimization is discussed in reference to execution of translation/optimization code, any known mechanism for translating/optimizing code, even through exclusive hardware, may be utilized.

In one embodiment, upon encountering an identified section of hot code with core **201,** the hot code (a translated version thereof) is executed on core **202.** Any known trigger for determining when a hot code region is encountered may be utilized. A few high-level examples include: encountering/referencing an instruction address associated with the code region, fetching/decoding/scheduling/executing an instruction identifying a code section as hot code, fetching/decoding/scheduling/executing an instruction indicating a translated version of hot code is to be executed on another core, an external trigger from a monitor indicating a hot code region has been encountered, etc.

As an illustrative example, code distribution module **210** includes a monitor module implemented in hardware, software, or a combination thereof. When the monitor module identifies a hot region of code or translates the hot region to a translated region, the monitor module registers an instruction address associated with the hot region of code. This registration may include association of the instruction address with a location of the translated region of code. Then, when an instruction pointer (program counter) subsequently references the instruction address, it's determined from the registered instruction address that a hot region of code has been encountered. Note that any form of detection may be used here, such as a synchronous or asynchronous interrupt style of handling the encounter event. Additionally, hardware, micro-code, and/or firmware may be capable of directly handling the encounter of a hot code section without interrupt-like handling, i.e. the trigger event isn't serviced by a handler. Note that core **101** and **102** may share certain hardware structures, such as a mapping structure, to identify addresses that are registered as hot code.

In response to encountering a hot code section on core **201,** a translated and/or optimized version of the hot code section is executed on core **202.** Despite how the hot code section is identified and encountered on core **201,** any known method for enabling execution of code on another core may be utilized. In one embodiment, a collaboration module is utilized to enable such execution. For example, cores **201, 202** may share certain hardware structures and/or include communication channels to share information. As one example, cores **101, 102** may share a data cache, so when execution is migrated from core **201** to **202,** the data isn't physically moved, but rather is already resident in the shared cache. Similarly, a register file, such as a shadow register file, in one embodiment, is shared between cores **201** and **202,** so register states (context) doesn't have to be migrated from one core to another. As an alternative, instead of sharing a register file, a high-speed interconnect may be used to physically migrate context, or a portion thereof, from one core to another. Additionally, with infrequent transfers software may be utilized to perform such transfers.

As one example, input values into a hot code-section are transferred from core **201** to core **202** to support execution of the hot-code section on core **202.** After execution, output values are then transferred back to core **201.** In one embodiment, only identified input/output values from code sections are transferred, i.e. a partial context switch. Note that such input values may be identified by the user (software/compiler) and/or by hardware/firmware algorithms. Here, direct access hardware may be adapted to read input values from registers, buffers, or other structures in core **201** and write them to core **202.** Inversely, the same or different hardware may be utilized to read values from core **202** and write them to core **201.** However, where identifying such values becomes too cumbersome, an entire context switch, replication, or sharing may be performed to provide values between cores **201** and **202.**

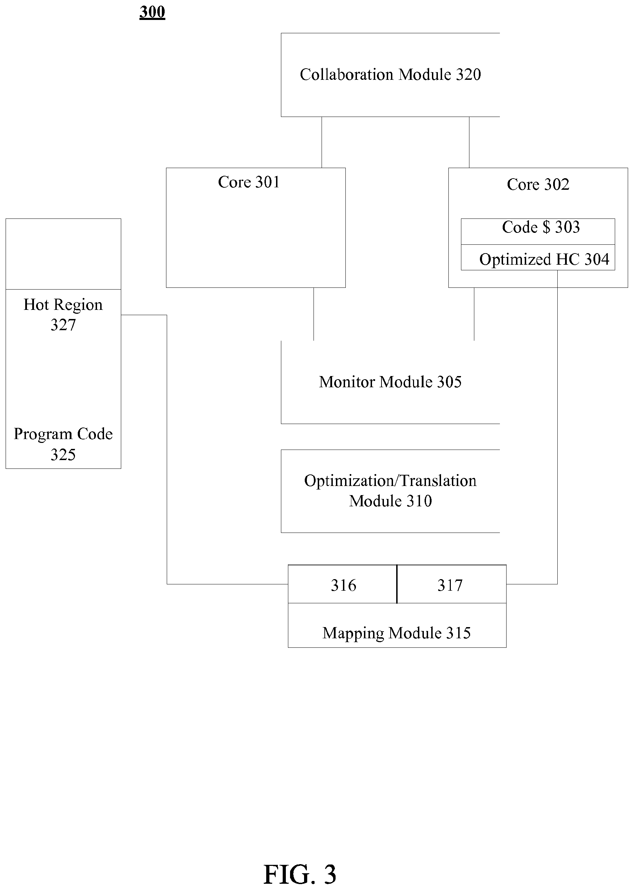

Referring next to **Figure 3****,** an embodiment of a processor for distributing code among cores to achieve maximum performance and power savings is depicted. As above, processor **300** includes two processor cores; each of which is of a different core type. As one example, core **301** is a native, out-of-order (OOO) processor core, while core **302** is a software managed, in-order processor core. Core **301** and **302** may, but are not required to, recognize different ISA types. In fact, core **302** may recognize a subset of core **301's** ISA. Or, core **302** may include a separate ISA that partially overlaps core **301's** ISA. As described above, a core or processor is often associated with an ISA a definition of recognized instruction by decode hardware/software in the core or processor.

In one embodiment, monitor module **305** is to monitor execution of native program code **325** on native, OOO core **301;** through this monitoring, module **305** is to identify a hot portion/region **327** of the program code **325.** Monitor module may be comprised of hardware, software, or a combination thereof. In one embodiment, monitor module **305** includes hardware to monitor execution. As one example, the hardware includes micro-architectural and/or architectural hooks, such as retirement pushout tags/counters to measure retirement pushouts, instruction counters to count numbers of instructions, overall trace execution measurement logic to measure overall execution length and/or time, recurrence counters to count a number of times a code section was executed, etc., to determine performance/power metrics during execution of code **325.** This type of hardware may be located in any portion of an integrated circuit/processor, such as within out-of-order core **301,** within in-order core **302,** and in a non-associated portion of the integrated circuit that is not included within either OOO processor core **301** or the in-order processor core **302.**

In another embodiment, monitor module **305** includes software, such as monitor code, which when executed, is to monitor execution of program code **325** and to identify a hot region **327** of the program code **325.** As an illustrative example, processor **300** includes storage structures, such as Read Only Memory (ROM) structures, programmable logic, etc, to hold code, microcode, or machine code, when executed, causes the monitoring to occur. However, monitor code may be stored in any machine readable medium associated with cores **301, 302.** Note that use of the term execution is not only limited to execution by traditional execution units, but instead may refer to execution by other hardware or programmable logic associated with processor **300,** such as execution of microcode with firmware. Here, the executed monitor code may perform the same monitoring of recurrence, power, and performance metric that is measureable by hardware.

As one example, the monitoring hardware and/or code tracks/determines recurrence patterns for code sections of the program code. As a simple example, a data structure associates a reference to a code section (code region **327**), such as an instruction address, with a count of the number of times the instruction address/code section has been executed on core **301.** Note that the count may be associated with an absolute count (total count) or a temporal count (a count over an amount of time).

In one embodiment, monitor module **305** is adapted to identify/detect a hot portion **327** of program code **325.** Monitor module **305,** in one example, is to measure one or more performance metric(s) for the hot portion **327** of the program code **325** during execution on OOO processor core **301.** And module **305** is to identify the hot portion **327** of program code **325** in response to the performance metric(s) on the OOO processor core being below a threshold. A non-exhaustive, illustrative list of examples of performance metrics include: instruction retirement pushout, a number of instructions executed, an amount of time to execute a code region, a number of times a code regions is encountered/executed, an amount of power consumed during execution of a code region, an amount of time spent in different power states during execution of a code region, a thermal density during execution of a code segment, etc.

Using one of the examples above, assume OOO core **301** is executing program code **325.** And monitor code is being executed to determine a number of times regions of program code **325** are executed on core **301.** When that count meets or exceeds a threshold, in one embodiment, monitor module **305** identifies/determines that region **327** is hot code. If a threshold value of three is used, then when monitor code executing on core **302** detects hot region **327** being re-executed a third time on core **301,** region **327** is identified as a hot region of code. The specific example of determining a recurrence pattern may be extrapolated to see that a similar process count, compare against a threshold, and identify may be employed for any measured performance metric. Furthermore, determining a performance metric is not limited to simple counts, but may include any known algorithm for determining execution or power savings performance in a core, processor, or computer system.

However, identifying hot region **327** within program code **325** is not limited to dynamic performance monitoring. Instead, compiler or static program analysis may be utilized to determine code sections that are likely to be better suited for execution on in-order core **302.** For example, assume program analysis reveals that hot region **327** is likely to be re-executed a number of times. In response to this discovery, a compiler or user may insert instructions or demarcations identifying a section of code as hot code. Therefore, when decoders of core **301** encounter such instructions, they recognize that region **327** is hot code that is to be executed on core **302.** Note that in some embodiments, users may identify such regions of code based on their knowledge of a program without in-depth program analysis.

In one embodiment, in response to identifying region **327** as hot, code **327** is optimized or translated by optimization/translation module **310** to obtain optimized hot code **304.** Similar to operation of monitor module **305,** optimization module **310** may be implemented in hardware, software, firmware, or a combination thereof. For example, translation and/or optimization code may be stored in structures associated with core **302,** core **301,** or processor **300.** To illustrate, binary translation code is stored in firmware associated with core **302.** And the binary translation code is executed to translate hot region **327** from a native format for core **301** to a format for core **302.** Note that translation may be between ISAs or other formats, while optimization may include any known method for optimizing code for execution, such as known techniques for optimizing code from parallel execution on OOO core **301** to serial execution on core **302,** as well as the inverse.

However, use of binary translation code in firmware is purely illustrative, as any translation code or optimization code may be held anywhere in a computer system, such as microcode in core **302** or regular program code in a system memory. And, the optimization code may executed in any manner to translate or optimize hot region **327** to obtain optimized hot code **304.** In fact, any known methods or apparatus' for translating or optimizing code for a core, such as the methods and apparatus' known for translating code in current software managed processors may be used.

Whether software, firmware, hardware, or a combination is to be used, translation may be performed statically or dynamically. In fact, much like monitoring may be done dynamically during runtime or statically before execution, translation and optimization may similarly be performed. In the example where a compiler or user identifies hot region **327,** the optimization and translation may take place at that point (before execution). Here, a hot code identifier instruction may be utilized to both identify hot code region **327** and specify the location of the optimized/translated code **304.** However, no matter if section **327** is identified as hot code before or during execution, the optimization and translation, in some embodiments, takes place dynamically (during runtime).

In one embodiment, hot region **327** is optimized/translated in parallel with other execution. In one example, core **302** begins executing optimization code in parallel with core **301's** execution of region **327.** Here, monitor module **305** detects execution of hot code region **327** on core **301,** so optimization is initiated on core **302.** While further instructions from hot region **327** are still being executed on core **301,** core **302** begins optimization. As a result, core **302** is essentially optimizing hot code **327** in parallel with execution of hot code **327** on core **301.** In another example, core **301** executes other sections of program code **325** or other mutually exclusive code in parallel to core **302**'s optimization of hot code **327.** In another embodiment, optimization of hot region **327** is done serially. For example, core **301** executes hot region **327,** and then subsequently core **301** or **302** optimizes hot code region **327.**

In one embodiment, code **327** is stored at its original memory location and translated on the fly by core **302.** However, in most cases, it's more efficient to translate/optimize an entire code section before execution. As a result, after optimization/translation module **310** optimizes code for a core, such as core **302,** the optimized hot code **304** is stored elsewhere. The other location for optimized hot code **304** may be another location in memory, such as a home, system memory location. Yet, since hot code **327** is often associated with frequent execution, it's potentially advantageous to hold optimized version **304** closer to core **302.** Therefore, in the illustrated embodiment, core **303** includes a code cache **302** to hold the optimized hot code **304.** Note that code cache **303** may be a separate cache structure in core **302;** a shared cache structure, such as a shared instruction or data cache in core **302;** or other general storage structure associated with core **302.**

Referring back to the discussion of monitor module **305,** one embodiment of encountering hot code region **327** includes a program counter referencing an instruction address associated with a code section. As depicted, mapping module **315** is to hold code region reference, such as the instruction address, associated with optimized hot code reference **317.** Essentially, an entry of mapping module **315** associates hot code region **327** with an optimized version thereof (optimized hot code **304**). As an illustrative example, reference **316** includes an address, such as the instruction address, associated with hot region **327.** In this scenario, when core **301** encounters (a program counter points to) the instruction address held in field **316** of mapping module **315,** then monitor module **305** indicates that hot region **327** has been encountered and is to be executed on core **302.** Collaboration module **320,** which is briefly described above and discussed in more detail below, then facilitates the movement of data and/or context to core **302** for execution.

Determining hot region **327** has been encountered and is to be executed on core **302,** in the above example, is only on reference **316.** The association of field **317** with field **316** may then be utilized to quickly determine where optimized hot code version **304** of region **327** is located. As a result, field **317** may include any reference to the location of optimized hot code **304.** A few simple examples of such a reference include: an address of an entry in code cache **303** holding optimized code **304,** an offset from the start of code cache **303** to entry **304** holding optimized hot code, and a physical or linear address associated with entry **304.** Mapping module **315** is illustrated in a simple table structure, which may be implemented and/or maintained in hardware, software, firmware, or a combination thereof. Yet, any known method for associating one location with another location may be utilized for associating hot code **327** with an optimized version thereof.

Although not specifically illustrated, portions of monitor module **305** in combination with mapping module **315** may form a trigger module for indicating optimized hot code **304** is to be executed on core **302,** instead of native code **327** on core **301.** As an example, when a program counter for core **301** is moved to a next instruction address, trigger hardware checks that address against references stored in mapping hardware table **315.** Here, assume the program counter points the instruction address that references code region **327** held in field **316.** Then, the trigger hardware, based on the entry in mapping table **315,** indicates that an optimized code region **304** for code region **327** exists. As a result, execution of code region **327** on core **301** may be elided, since an optimized version already exists and is to be executed on core **302.**

In one embodiment, core **301** halts execution (stops or transitions into a low power state) until core **302** completes execution of the optimized code. However, this may not take full advantage of the processing capacity of processor **300.** Therefore, in another embodiment, core **301** interleaves execution of another software thread (code other than program code **325**), while optimized hot code **304** is executing on core **302.** As yet another example, core **301** may execute other portions of program code **325** speculatively, which essentially performs a run-ahead helper thread of execution, or executes other portions of code **325** that don't depend from code region **327** out-of-order.

Collaboration module **320,** in one embodiment, provides collaboration functionality between cores **301, 302.** As the simplest example, collaboration module **320** includes an interconnect between cores **301, 302** to transfer information. Yet, in another embodiment collaboration module includes other hardware, which may be exclusive to individual cores or shared between, to facilitate the aforementioned collaboration. For example, core **302** may share a shadow register file of core **301,** such that a full context switch of register state from core **301** to core **302** does not have to be performed when optimized hot code **304** is executed on core **302.** Instead, core **302** is able to directly access the shadow register file in that scenario. However, collaboration module is not only limited to shared structures and/or an interconnect. In fact, collaboration module **320** may include hardware, firmware, software, or a combination thereof to provide direct read and/or write access to registers, storage structures, and buffers in both cores **301, 302.** As a result, collaboration module **320,** in one embodiment, is capable of transferring data/register values needed for execution of optimized hot code from core **301** to core **302.** And, it's also capable of transferring results back from core **302** to core **301** to enable subsequent proper execution on core **301.**

Although monitor module **305** has primarily been discussed in reference to monitoring execution on native core **301,** monitor module **305,** in one embodiment, is also to monitor execution of optimized code on core **302.** As a result, monitor module **305** is capable of comparing performance of code section **327** on core **301** with performance of an optimized version **304** on core **302.** Furthermore, when performance on core **302** is lower than performance on core **301,** or the performance gain is small on core **302** in comparison to an increase in power consumption, then the decision to identify region **327** as hot code may be reversed. As an example, the entry of mapping module **315** indicating such a decision is de-allocated or invalidated; such that the next time core **301** encounters hot code **327,** monitor module **305** doesn't detect reference **316** and doesn't indicate an optimized hot code version of region **327** should be executed on core **302.** Essentially, the reversal migrates the previously identified region **327** back to out-of-order core **301.**

As a specific illustrative example to further demonstrate this performance comparison, assume code region **327** is identified as hot code based on a high-recurrence pattern and a high-instruction execution count. As a result, code **327** is optimized by binary translation code resident on core **302** to obtain optimized code **304.** When optimized code **304** is stored in code cache **303,** an entry in mapping table **315** is created to associate code region **327** with optimized version **304.** When core **301** next encounters a reference that matches the reference in field **316,** then execution of optimized code **304** is triggered on core **302,** instead of executing code region **327** on core **301.** Note that collaboration module through transfer, sharing, or context switching provides the proper values from core **301** to core **302.** During core **302's** execution of optimized hot code **304,** the same performance metric-instruction execution count-is tracked by monitor module **305.** If the instruction execution count is less than code region **327** was executed on core **301,** then the status quo of region **327** being identified as hot code continues in the future. However, if the instruction execution count is longer on core **302** or a significant power increase is detected, then the identification of region **327** as hot code may be reversed, as described above.

In addition to providing communication between cores **301** and **302,** collaboration module **320** may also include other features to manage multiple cores of different types. As a first example, a power manager implements a power algorithm to ensure core **301** and **302** don't operation at maximum power at the same time. However, this example is purely illustrative. And other power algorithms may allow such maximum operation. As another power consideration, core 302 may reside in a power state below maximum (a low-power state) during monitoring of execution on core 301. For example, when core 301 is associated with mechanisms to perform its own monitoring, then core 302 doesn't need to be fully powered until there is an optimized version of code to be executed. As a result, power is potentially saved by turning off core 302 until it's needed for execution. Inversely, core 301 may be power down (put in a power state above maximum, such as an ACPI low power state), while core 302 is executing optimized hot code.

Turning to **Figure 4****,** an embodiment of a flow diagram for a method of distributing code among an out-of-order core and an in-order core to achieve maximum performance and power savings is illustrated. Although the flows of **Figure 4** are illustrated in a substantially serial fashion, the flows may be performed in a different order, as well as in parallel. For example, flows **410** and **415** may be performed during compilation of program code before the program is executed on an out-of-order core in flow **405.** Furthermore, each of the flows may be performed utilizing hardware, firmware, or through execution of program code.

In flow **405,** execution of program code on an out-of-order (OOO) processor core in a processor is monitored. Reference to program code, in one embodiment, refers to (1) execution of a compiler program(s), either dynamically or statically, to compile other program code; (2) execution of main program, such as an operating system, hypervisor, application code, or other software program; (3) execution of other program code, such as libraries, associated with the main program code, (4) execution of other program code, such as helper threads or other tasks, which may not be directly associated with main program; or (5) a combination thereof.

A compiler often includes a program or set of programs to translate source text/code into target text/code. Usually, compilation of program/application code with a compiler is done in multiple phases and passes to transform hi-level programming language code into low-level machine or assembly language code. Yet, single pass compilers may still be utilized for simple compilation. A compiler may utilize any known compilation techniques and perform any known compiler operations, such as lexical analysis, preprocessing, parsing, semantic analysis, code generation, code transformation, and code optimization.

Larger compilers often include multiple phases, but most often these phases are included within two general phases: (1) a front-end, i.e. generally where syntactic processing, semantic processing, and some transformation/optimization may take place, and (2) a back-end, i.e. generally where analysis, transformations, optimizations, and code generation takes place. Some compilers refer to a middle end, which illustrates the blurring of delineation between a front-end and back end of a compiler. As a result, reference to insertion, association, generation, or other operation of a compiler may take place in any of the aforementioned phases or passes, as well as any other known phases or passes of a compiler.

In one embodiment, monitoring execution of program code comprises tracking a number of times code segments/regions within the program code are executed. Code regions may be determined in any known manner of grouping instructions/code. As an example, each time an instruction address associated with a code section is referenced by a program counter of the OOO core, a recurrence count is incremented. If the recurrence count for the code section exceeds a threshold, in one embodiment, the code section is identified as hot code in flow **410.**

Either in conjunction with determining recurrence patterns or separately, monitoring execution of program code may include determining/tracking a performance metric associated with code sections. As disclosed above, exemplary performance metrics include: instruction retirement pushout, a number of instructions executed, an amount of time to execute a code region, a number of times a code regions is encountered/executed, an amount of power consumed during execution of a code region, an amount of time spent in different power states during execution of a code region, a thermal density during execution of a code segment. Yet, any known metric, or combination of merics, associated with processor execution may be monitored during execution of the program code.

In flow **410,** hot sections of the program code are identified based on recurrence patterns, performance metrics, or a combination thereof. Similar to the example above, where a recurrence count is compared to a threshold, performance metrics may also be compared to a threshold. For example, a monitor may count the number of retirement pushouts that exceed a pushout time threshold. And if the pushouts exceed a count threshold, then the code section is identified as a hot section of code. Although this example discloses only a single performance metric as a consideration, identifying hot code sections of code may be based on any combination of performance metrics and/or recurrence patterns. For example, an algorithm may be devised for evaluating a plurality of performance metrics, power considerations, and a recurrence pattern to identify a code section as hot code. As the algorithm would be implementation specific and the number of permutations would be extensive, the details of a combinational algorithm is not discussed in detail to avoid unnecessarily obscuring the description. As described above, identifying code sections as hot code may be done before execution of the program code, such as by a compiler during compilation of the program code, or at runtime by a runtime compiler, hardware, firmware, other software, or a combination thereof.

In response to identifying hot code regions, the hot sections of the program code are optimized for execution on a co-designed processor core to obtain optimized hot sections of the program code in flow **415.** In one embodiment, such optimization includes translating the hot sections of the program code from native instructions, which are recognizable by decode logic associated with the out-of-order processor core, to co-designed instructions, which are recognizable by decode logic associated with the co-designed core. However, translation is not required. In fact, in some embodiments, the co-designed core may be a serial core capable of executing the same ISA as the out-of-order core, or a subset thereof. In this scenario, the code may not be translated from one ISA to another, but rather translated/optimized from a format for out-of-order execution to a format for serial execution. Any known method for translating and/or optimizing code, such as known compiler methods for analyzing, translating, transforming, and/or optimizing code, may be utilized. As a specific illustrative example, binary translation code may reside on the co-designed core to translate/optimize the program code to the optimized hot section of the program code.

The optimized hot sections of the program code are distributed to the co-designed processor core in flow **420.** In one embodiment, distribution includes writing the optimized hot sections of the program code to a code cache associated with the co-designed core. However, distribution may be done from any storage structure and at any time. For example, the optimized hot sections may be stored in a system memory and distributed to the co-designed core immediately before execution.

In flow **425,** the identified hot sections of the program code are associated with the optimized hot section of the program code. For example, a reference to the hot section of the program code and a reference to the optimized hot section is stored in an entry of a code mapping table. Continuing the code cache example, the reference to the optimized hot section includes any reference to the location of the optimized hot code within the code cache, such as an address or offset. However, any known data structure and/or method may be utilized to associate the hot code section with the location of the optimized version thereof.

Then, when the code sections are encountered during execution on the out-of-order core, the optimized hot sections of the program code are executed with the co-designed processor core, instead of the out-of-order core, in flow **430.** As stated above, execution of the optimized hot sections of code may take place in parallel with execution of other code on the out-of-order core or in serial with other code on the out-of-order core based on the design implementation. However, in the parallel implementation, the out--of-order core may be capable of executing other code from the same thread as the optimized hot code, as well as code interleaved from other threads.

In flow **435,** execution of optimized hot sections on the co-designed processor core is monitored in a similar manner to the monitoring performed in flow **405** of execution on the out-of-order processor core. For example, the same performance metrics monitored in flow **405** may also be monitored during execution of the optimized hot section of the program code with the in-order, co-designed processor core. And it may be indicated that the hot section of program code is to be executed with the out-of-order core, instead of executing the optimized hot section of the program code with the in-order core, in response to the performance metrics indicating less performance on the in-order core as compared to the out-of-order core.

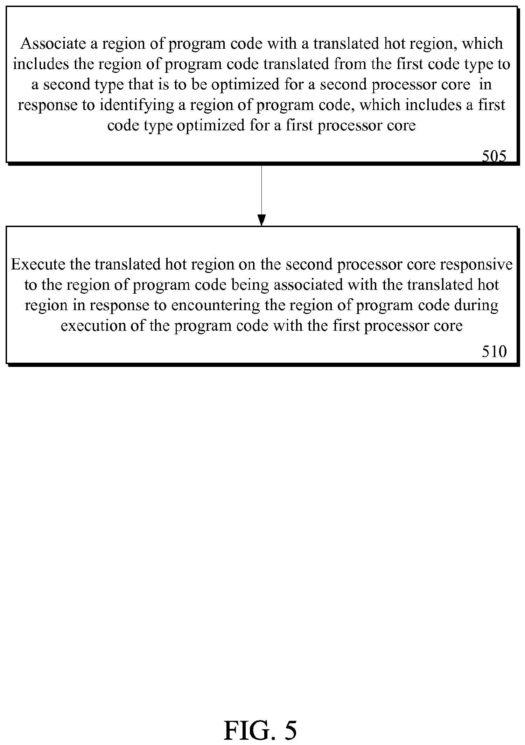

Turning to **Figure 5****,** another embodiment of a flow diagram for a method of distributing code among an out-of-order core and an in-order core to achieve maximum performance and power savings is depicted. In flow **505,** in response to identifying a region of program code, which includes a first code type optimized for a first processor core, as hot code, associating the region of program code with a translated hot region, which includes the region of program code translated from the first code type to a second type that is to be optimized for a second processor core.

In one embodiment, the first processor core includes an out-of-order processor core, the first code type includes an out-of-order code type optimized for the out-of-order processor core, the second processor core includes an in-order processor core, and the second code type includes an in-order code type optimized for the in-order processor core. As one example, the out-of-order processor core is associated with decode logic that recognizes a first Instruction Set Architecture (ISA) and the in-order processor core is associated with decode logic that recognizes a second ISA. Here, the second code type is further optimized for the second ISA.

In one embodiment, decode logic associated with the first processor core is to decode at least one instruction from the program code indicating the region of program code is hot code. Here, a user may include the instruction in the program code to identify the hot region. Or, a compiler, when compiling the program code, may insert the instruction in response to analysis of the program code. In another embodiment, hardware monitors execution of the region of the program code on the first core and identifies the region of program code as hot code based on the hardware monitoring.

In addition, the region of program code may be associated with a translated hot region through updating an entry in a data structure with a reference to the region of the program code associated with a reference to the translated hot region. For example, the references to the translated hot region may include: an address, an instruction address, a location within a cache memory, a program counter value, and an instruction opcode.

In flow **510,** the translated hot region on the second processor core is executed in response to encountering the region of program code during execution of the program code with the first processor core. As an example, when the first processor core's instruction pointer references the hot region of code, the translated region is executed on the second processor. However, any time for encountering an instruction may trigger execution on the second core. For example, fetching of a specific address or decoding of a specific instruction may instead trigger the execution.

In one embodiment, power considerations are also taken into account when identifying and distributing code among cores. As an illustrative example, when t the second processor core executes the translated hot region, the first processor core is transitioned into a low power state to save power. Moreover, specific power considerations may limit both cores from operating at maximum power at the same time in one embodiment.

As a result of coupling a native core with a different co-designed core the best of power and execution benefits are potentially obtained even within a single application. For example, with an out-of-order core and a software managed, in-order core, code that is not efficient on the software-managed core is migrated to the out-of-order core. And inversely, the code that is not efficient on the out-of-order core is migrated to the software managed core. Through hardware, software, firmware, or a combination therefore parallel execution of native code, hot code detecting, and hot code optimization may be efficiently managed, while individual sections of multiple threads may be efficiently interleaved in a pipelined fashion between the out-of-order and in-order co-designed cores. As a result, maximum performance may be obtained, while achieving better power performance through different power efficiency techniques, such as placing the out-of-order core in a low power state during execution on the in-order core in some implemenations.

A module as used herein refers to any hardware, software, firmware, or a combination thereof. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices. However, in another embodiment, logic also includes software or code integrated with hardware, such as firmware or micro-code.

A value, as used herein, includes any known representation of a number, a state, a logical state, or a binary logical state. Often, the use of logic levels, logic values, or logical values is also referred to as 1 's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible or machine readable medium which are executable by a processing element. A machine-accessible/readable medium includes any mechanism that provides (i.e., stores and/or transmits) information in a form readable by a machine, such as a computer or electronic system. For example, a machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding propagated signals (e.g., carrier waves, infrared signals, digital signals); etc.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

## Claims

1. An apparatus comprising: an integrated circuit including,
an out-of-order, OOO, processor core adapted to execute program code out of program order; and
an in-order processor core adapted to execute a hot portion of the program code in program order, wherein the hot portion of code is identified by a recurrence pattern of the portion of code,
wherein the integrated circuit further comprises monitor hardware adapted to identify the hot portion of the program code and further includes code storage logic to hold optimization code, which, when executed, optimizes the hot portion of the program code for execution on the in-order processor core, and wherein the optimization code is to be executed to optimize the hot portion of the program code in response to the monitor hardware identifying the hot portion of the program code,
wherein the optimization code includes optimization microcode, and wherein the optimization microcode, when executed to optimize the hot portion of the program code for execution on the in-order processor core, comprises: the optimization microcode,
when executed, translates the hot portion of the program code from a first Instruction Set Architecture, ISA, recognized by decoders of the OOO processor core to a second ISA recognized by decoders of the in-order processor core.

2. The apparatus of claim 1, wherein the monitor hardware is adapted to:
monitor execution of the program code on the OOO processor core;
determine a recurrence pattern for the hot portion of the program code based on monitoring execution of the program code on the OOO processor core; and identify the hot portion of the program code based on the recurrence pattern.

3. The apparatus of claim 2, wherein the monitor hardware adapted to determine a recurrence pattern for the hot portion of the program code based on monitoring execution of the program code on the OOO processor core comprises: the monitor hardware being adapted to determine a number of times the hot portion of the program code is executed over time; and wherein the monitor hardware adapted to identify the hot portion of the program code based on the recurrence pattern comprises: the monitor hardware being adapted to identify the hot portion of the program code in response to the number of times being greater than a threshold.

4. The apparatus of claim 2, wherein the monitor hardware is included in a portion of the integrated circuit selected from the group consisting of the OOO processor core, the in-order processor core, and a non-associated portion of the integrated circuit that is not included within either the OOO processor core or the in-order processor core.

5. The apparatus of claim 1, wherein the monitor hardware is adapted to measure a performance metric for the hot portion of the program code during execution on the OOO processor core and to identify the hot portion of program code in response to the performance metric on the OOO processor core being below a threshold.

6. The apparatus of claim 5, wherein the monitor hardware is also adapted to measure a performance metric for the hot portion of the program code during execution on the in-order processor core and to indicate the hot portion of program code is no longer considered a hot portion of program code in response to the performance metric for the hot portion of the program code during execution on the in-order processor core being less than the performance metric for the hot portion of the program code during execution on the OOO processor core.

7. The apparatus of claim 1, wherein the integrated circuit further comprises:
collaboration hardware adapted to provide input values from the OOO processor core to the in-order processor core, comprising:
context switch logic adapted to perform at least a partial context switch from the OOO processor core to the in-order processor core, wherein the at least the partial context includes at least the input values; and/or
direct access hardware adapted to read the input values from registers in the OOO processor core and write the input values to input registers in the in-order processor core.

8. The apparatus of claim 1, wherein the in-order processor core is associated with a code cache, the code cache being adapted to hold an optimized version of the hot portion of the program code after translation of the hot portion of the program code from the first ISA to the second ISA.

9. The apparatus of claim 1, wherein the integrated circuit further includes trigger hardware adapted to:
indicate the hot portion of the program code is hot code in response to the monitor hardware identifying the hot portion of the program code,
trigger execution of the hot portion of program code on the in-order processor core in response to the OOO processor core encountering the hot portion of the program code and the trigger hardware indicating the hot portion of the program code is hot code, and
hold a reference to the hot portion of the program code associated with a reference to an optimized version of the hot portion of the program code, which is optimized to be executed on the in-order processor core.

10. A method comprising:
identifying a hot section of program code;
optimizing the hot section of the program code for execution on an in-order processor core of a processor to obtain an optimized hot section of the program code; executing the program code on an out-of-order core of the processor; and
executing the optimized hot section of the program code on the in-order processor core, instead of executing the hot section of the program code on the out-of order processor core, in response to the out-of-order core encountering the hot section of the program code while executing the program code on the out- of-order processor; and
identifying the hot section of program code,
wherein the hot portion of code is identified by a recurrence pattern of the portion of code, and the method further comprises:
optimizing, using optimization code, the hot portion of the program code for execution on the in-order processor core, wherein the optimization code is to be executed to optimize the hot portion of the program code in response to a monitor hardware identifying the hot portion of the program code,
wherein the optimization code includes optimization microcode, and wherein the optimization microcode, when executed to optimize the hot portion of the program code for execution on the in-order processor core, comprises: the optimization microcode,
when executed, translates the hot portion of the program code from a first Instruction Set Architecture, ISA, recognized by decoders of the OOO processor core to a second ISA recognized by decoders of the in-order processor core.

11. The method of claim 10, further comprising associating the hot section of the program code with the optimized hot section of the program code, in particular:
storing a reference to the hot section of the program code and a reference to the optimized hot section in an entry of a code mapping table.

12. The method of claim 10, wherein identifying a hot section of program code comprises:
monitoring a performance metric during execution of a section of the program code on the out-of-order processor core,
identifying the section of the program code as the hot section of program code based on the performance metric in comparison with a performance threshold, and
indicating the hot section of program code is to be executed with the out-of- order core, instead of the optimized hot section of the program code to be executed with the in-order core, in response to the performance metric during execution of the optimized hot section of the program code with the in-order processor core indicating less performance than the performance metric during execution of a section of the program code with the out-of-order processor core.

13. The method of claim 10, wherein optimizing the hot section of the program code for execution on an in-order processor core to obtain an optimized hot section of the program code comprises executing binary translation code to translate the program code to the optimized hot section of the program code.

14. A machine readable medium including code, which, when executed by the apparatus of one of claims 1 to 9, causes the apparatus to perform the method of one of claims 10 to 13.

## Patentansprüche

1. Vorrichtung, die Folgendes umfasst: eine integrierte Schaltung, die Folgendes enthält:
einen ungeordneten Prozessorkern, OOO-Prozessorkern, der ausgelegt ist, Programmcode außerhalb der Programmreihenfolge auszuführen; und
einen geordneten Prozessorkern, der ausgelegt ist, einen heißen Abschnitt des Programmcodes in der Programmreihenfolge auszuführen, wobei
der heiße Abschnitt eines Codes durch ein Wiederholungsmuster des Codeabschnitts identifiziert wird,
die integrierte Schaltung ferner eine Überwachungs-Hardware umfasst, die ausgelegt ist, den heißen Abschnitt des Programmcodes zu identifizieren, und ferner eine Codespeicherlogik enthält, die ausgelegt ist, Optimierungscode zu enthalten, der, wenn er ausgeführt wird, den heißen Abschnitt des Programmcodes zur Ausführung auf dem geordneten Prozessorkern optimiert, wobei der Optimierungscode ausgeführt werden soll, um den heißen Abschnitt des Programmcodes als Antwort darauf zu optimieren, dass die Überwachungshardware den heißen Teil des Programmcodes identifiziert, und
der Optimierungscode Optimierungsmikrocode enthält und der Optimierungsmikrocode dann, wenn er ausgeführt wird, um den heißen Abschnitt des Programmcodes zur Ausführung auf dem geordneten Prozessor zu optimieren, Folgendes umfasst: der Optimierungsmikrocode übersetzt, wenn er ausgeführt wird, den heißen Abschnitt des Programmcodes von einer ersten Anweisungssatzarchitektur, ISA, die durch Decoder des OOO-Prozessorkerns erkannt wird, zu einer zweiten ISA, die durch Decoder des geordneten Prozessorkerns erkannt wird.

2. Vorrichtung nach Anspruch 1, wobei die Überwachungs-Hardware ausgelegt ist zum:
Überwachen einer Ausführung des Programmcodes auf dem OOO-Prozessorkern; und
Bestimmen eines Wiederholungsmusters für den heißen Abschnitt des Programmcodes auf der Grundlage einer Überwachungsausführung des Progammcodes auf dem OOO-Prozessorkern und Identifizieren des heißen Abschnitts des Programmcodes auf der Grundlage des Wiederholungsmusters.

3. Vorrichtung nach Anspruch 2, wobei die Überwachungs-Hardware, die ausgelegt ist, ein Wiederholungsmuster für den heißen Abschnitt des Programmcodes auf der Grundlage der Überwachungsausführung des Programmcodes auf dem OOO-Prozessorkern zu bestimmen, Folgendes umfasst: die Überwachungshardware ist ausgelegt, eine Anzahl von Malen zu bestimmen, die der heiße Abschnitt des Programmcodes im Zeitablauf ausgeführt wird; und die Überwachungs-Hardware, die ausgelegt ist, den heißen Abschnitt des Programmcodes auf der Grundlage des Wiederholungsmusters zu identifizieren, Folgendes umfasst: die Überwachungs-Hardware ist ausgelegt, den heißen Abschnitt des Programmcodes als Antwort darauf, dass die Anzahl von Malen größer als ein Schwellenwert ist, zu identifizieren.

4. Vorrichtung nach Anspruch 2, wobei die Überwachungs-Hardware in einem Abschnitt der integrierten Schaltung enthalten ist, der aus der Gruppe gewählt ist, die aus dem OOO-Prozessorkern, dem geordneten Prozessorkern und einem nicht zugeordneten Abschnitt der integrierten Schaltung, der weder im OOO-Prozessorkern noch im geordneten Prozessorkern enthalten ist, besteht.

5. Vorrichtung nach Anspruch 1, wobei die Überwachungs-Hardware ausgelegt ist, eine Leistungsfähigkeitsmetrik für den heißen Abschnitt des Programmcodes während der Ausführung auf dem OOO-Prozessorkern zu messen und den heißen Abschnitts eines Programmcodes als Antwort darauf, dass die Leistungsfähigkeitsmetrik auf dem OOO-Prozessorkern unter einem Schwellenwert liegt, zu identifizieren.

6. Vorrichtung nach Anspruch 5, wobei die Überwachungs-Hardware auch ausgelegt ist, eine Leistungsfähigkeitsmetrik für den heißen Abschnitt des Programmcodes während der Ausführung auf dem geordneten Prozessorkern zu messen und als Antwort darauf, dass die Leistungsfähigkeitsmetrik für den heißen Abschnitt des Programmcodes während der Ausführung auf dem geordneten Prozessor geringer als die Leistungsfähigkeitsmetrik für den heißen Abschnitt des Programmcodes während der Ausführung auf dem OOO-Prozessorkern ist, anzugeben, dass der heiße Abschnitt des Programmcodes nicht mehr als ein heißer Abschnitt betrachtet wird.

7. Vorrichtung nach Anspruch 1, wobei die integrierte Schaltung ferner Folgendes umfasst:
Kooperations-Hardware, die ausgelegt ist, Eingabewerte vom OOO-Prozessorkern zum geordneten Prozessorkern zu liefern, und die Folgendes umfasst:
eine Kontextumschaltlogik, die ausgelegt ist, mindestens ein Teilkontextumschalten vom OOO-Prozessorkern zum geordneten Prozessorkern durchzuführen, wobei mindestens der Teilkontext mindestens die Eingangswerte enthält; und/oder
Direktzugriffs-Hardware, die ausgelegt ist, die Eingangswerte aus Registern im OOO-Prozessorkern zu lesen und die Eingangswerte auf Eingangsregister im geordneten Prozessorkern zu schreiben.

8. Vorrichtung nach Anspruch 1, wobei dem geordneten Prozessorkern ein Codezwischenspeicher zugeordnet ist und der Codezwischenspeicher ausgelegt ist, eine optimierte Version des heißen Abschnitts des Programmcodes nach der Übersetzung des heißen Abschnitts des Programmcodes von der ersten ISA zur zweiten ISA zu enthalten.

9. Vorrichtung nach Anspruch 1, wobei die integrierte Schaltung ferner eine Auslöse-Hardware enthält, die ausgelegt ist zum
Angeben, dass der heiße Abschnitt des Programmcodes ein heißer Code ist, als Antwort darauf, dass die Überwachungs-Hardware den heißen Abschnitt des Programmcodes identifiziert,
Auslösen der Ausführung des heißen Abschnitts eines Programmcodes auf dem geordneten Prozessorkern als Antwort darauf, dass der OOO-Prozessorkern auf den heißen Abschnitt des Programmcodes stößt und die Auslöse-Hardware angibt, dass der heiße Abschnitt des Programmcodes heiß ist, und
Halten eines Bezugs zum heißen Abschnitt des Programmcodes, der einem Bezug auf eine optimierte Version des heißen Abschnitts des Programmcodes, die optimiert ist, auf dem geordneten Prozessorkern ausgeführt zu werden, zugeordnet ist.

10. Verfahren, das Folgendes umfasst:
Identifizieren eines heißen Abschnitts von Programmcode;
Optimieren des heißen Abschnitts des Programmcodes zur Ausführung auf einem geordneten Prozessorkern eines Prozessors, um einen optimierten heißen Abschnitt des Programmcodes zu erhalten; Ausführen des Programmcodes auf einem ungeordneten Kern des Prozessors und Ausführen des optimierten heißen Abschnitts des Programmcodes auf dem geordneten Prozessorkern, statt den heißen Abschnitt des Programmcodes auf dem ungeordneten Prozessorkern auszuführen, als Antwort darauf, dass der ungeordnete Kern auf den heißen Abschnitt des Programmcodes stößt, während der Programmcode auf dem ungeordneten Prozessor ausgeführt wird; und
Identifizieren des heißen Abschnitts von Programmcode, wobei
der heiße Abschnitt eines Codes durch ein Wiederholungsmuster des Codeabschnitts identifiziert wird und das Verfahren ferner Folgendes umfasst:
Optimieren unter Verwendung von Optimierungscode des heißen Abschnitts des Programmcodes zur Ausführung auf dem geordneten Prozessorkern, wobei der Optimierungscode ausgeführt werden soll, um den heißen Abschnitt des Programmcodes als Antwort darauf, dass eine Überwachungs-Hardware den heißen Abschnitt des Programmcodes identifiziert, zu optimieren, wobei
der Optimierungscode Optimierungsmikrocode enthält und der Optimierungsmikrocode dann, wenn er ausgeführt wird, um den heißen Abschnitt des Programmcodes zur Ausführung auf dem geordneten Prozessor zu optimieren, Folgendes umfasst: der Optimierungsmikrocode übersetzt, wenn er ausgeführt wird, den heißen Abschnitt des Programmcodes von einer ersten Anweisungssatzarchitektur, ISA, die durch Decoder des OOO-Prozessorkerns erkannt wird, zu einer zweiten ISA, die durch Decoder des geordneten Prozessorkerns erkannt wird.

11. Verfahren nach Anspruch 10, das ferner ein Zuordnen des heißen Abschnitts des Programmcodes zum optimierten heißen Abschnitt des Programmcodes umfasst, insbesondere:
Speichern eines Bezugs zum heißen Abschnitt des Programmcodes und eines Bezugs zum optimierten heißen Abschnitt in einem Eintrag einer Codeabbildungstabelle.

12. Verfahren nach Anspruch 10, wobei das Identifizieren eines heißen Abschnitts von Programmcode Folgendes umfasst:
Überwachen einer Leistungsfähigkeitsmetrik während der Ausführung eines Abschnitts des Programmcodes auf dem ungeordneten Prozessorkern,
Identifizieren des Abschnitts des Programmcodes als den heißen Abschnitt von Programmcode auf der Grundlage der Leistungsfähigkeitsmetrik im Vergleich mit einem Leistungsfähigkeitsschwellenwert und
Angeben, dass der heiße Abschnitt von Programmcode mit dem ungeordneten Kern anstatt des optimierten heißen Abschnitts des Programmcodes, der mit dem geordneten Prozessor ausgeführt werden soll, ausgeführt werden soll als Antwort darauf, dass die Leistungsfähigkeitsmetrik während einer Ausführung des optimierten heißen Abschnitts des Programmcodes mit dem geordneten Prozessorkern eine geringere Leistungsfähigkeit als die Leistungsfähigkeitsmetrik während einer Ausführung eines Abschnitts des Programmcodes mit dem ungeordneten Prozessorkern angibt.

13. Verfahren nach Anspruch 10, wobei das Optimieren des heißen Abschnitts des Programmcodes zur Ausführung auf einem geordneten Prozessorkern, um einen optimierten heißen Abschnitt des Programmcodes zu erhalten, ein Ausführen eines binären Übersetzungscodes umfasst, um den Programmcode zum optimierten heißen Abschnitt des Programmcodes zu übersetzen.

14. Maschinenlesbares Medium, das Code enthält, der, wenn er durch die Vorrichtung nach einem der Ansprüche 1 bis 9 ausgeführt wird, bewirkt, dass die Vorrichtung das Verfahren nach einem der Ansprüche 10 bis 13 durchführt.

## Revendications

1. Appareil comprenant : un circuit intégré comprenant,
un cœur de processeur hors service, OOO, adapté pour exécuter du code de programme hors service de programme ; et
un cœur de processeur en service adapté pour exécuter une partie chaude du code de programme en service du programme, la partie chaude du code étant identifiée par un motif de récurrence de la partie du code,
le circuit intégré comprenant en outre du matériel de surveillance adapté pour identifier la partie chaude du code de programme et comprenant en outre une logique de stockage de code pour maintenir un code d'optimisation, qui, lorsqu'il est exécuté, optimise la partie chaude du code de programme en vue de son exécution sur le cœur de processeur en service, et le code d'optimisation devant être exécuté pour optimiser la partie chaude du code de programme en réponse au matériel de surveillance identifiant la partie chaude du code de programme,
le code d'optimisation comprenant un microcode d'optimisation, et le microcode d'optimisation, lorsqu'il est exécuté pour optimiser la partie chaude du code de programme en vue de son exécution sur le cœur de processeur en service, comprenant : le microcode d'optimisation, lorsqu'il est exécuté, traduisant la partie chaude du code de programme depuis une première architecture de jeu d'instructions, ISA, reconnue par les décodeurs du cœur de processeur OOO vers une deuxième ISA reconnue par les décodeurs du cœur de processeur en service.

2. Appareil selon la revendication 1, le matériel de surveillance étant adapté pour :
surveiller l'exécution du code de programme sur le cœur de processeur OOO ;
déterminer un motif de récurrence pour la partie chaude du code de programme sur la base de la surveillance de l'exécution du code de programme sur le cœur de processeur OOO ; et identifier la partie chaude du code de programme sur la base du motif de récurrence.

3. Appareil selon la revendication 2, le matériel de surveillance adapté pour déterminer un motif de récurrence pour la partie chaude du code de programme sur la base de la surveillance de l'exécution du code de programme sur le cœur de processeur OOO comprenant : le matériel de surveillance étant adapté pour déterminer un certain nombre de fois où la partie chaude du code de programme est exécutée dans le temps ; et
le matériel de surveillance adapté pour identifier la partie chaude du code de programme sur la base du motif de récurrence comprenant : le matériel de surveillance étant adapté pour identifier la partie chaude du code de programme en réponse au fait que le nombre de fois est supérieur à un seuil.

4. Appareil selon la revendication 2, le matériel de surveillance étant compris dans une partie du circuit intégré choisie dans le groupe constitué par le cœur de processeur OOO, le cœur de processeur en service et une partie non associée du circuit intégré qui n'est comprise ni dans le cœur de processeur OOO ni dans le cœur de processeur en service.

5. Appareil selon la revendication 1, le matériel de surveillance étant adapté pour mesurer une mesure de performance pour la partie chaude du code de programme pendant l'exécution sur le cœur de processeur OOO, et pour identifier la partie chaude du code de programme en réponse au fait que la mesure de performance sur le cœur de processeur OOO est inférieure à un seuil.

6. Appareil selon la revendication 5, le matériel de surveillance étant également adapté pour mesurer une mesure de performance pour la partie chaude du code de programme pendant l'exécution sur le cœur de processeur en service et pour indiquer que la partie chaude du code de programme n'est plus considérée comme une partie chaude du code de programme en réponse au fait que la mesure de performance pour la partie chaude du code de programme pendant l'exécution sur le cœur de processeur en service est inférieure à la mesure de performance pour la partie chaude du code de programme pendant l'exécution sur le cœur de processeur OOO.

7. Appareil selon la revendication 1, le circuit intégré comprenant en outre : du matériel de collaboration adapté pour fournir des valeurs d'entrée à partir du cœur de processeur OOO au cœur de processeur en service, comprenant :
une logique de commutation de contexte adaptée pour effectuer au moins une commutation de contexte partielle depuis le cœur de processeur OOO au cœur de processeur en service, l'au moins le contexte partiel comprenant au moins les valeurs d'entrée ; et/ou
un matériel d'accès direct adapté pour lire les valeurs d'entrée à partir des registres du cœur de processeur OOO et écrire les valeurs d'entrée dans les registres d'entrée du cœur de processeur en service.

8. Appareil selon la revendication 1, le cœur de processeur en service étant associé à un cache de code, le cache de code étant adapté pour maintenir une version optimisée de la partie chaude du code de programme après traduction de la partie chaude depuis le code de programme du premier ISA au second ISA.

9. Appareil selon la revendication 1, le circuit intégré comprenant en outre du matériel de déclenchement adapté pour :
indiquer que la partie chaude du code de programme est un code chaud en réponse à l'identification par le matériel de surveillance de la partie chaude du code de programme,
déclencher l'exécution de la partie chaude du code de programme sur le cœur de processeur en service en réponse à la rencontre du cœur de processeur OOO avec la partie chaude du code de programme et le matériel de déclenchement indiquant que la partie chaude du code de programme est du code chaud, et
maintenir une référence à la partie chaude du code de programme associée à une référence à une version optimisée de la partie chaude du code de programme, qui est optimisée pour être exécutée sur le cœur de processeur en service.

10. Procédé comprenant :
l'identification d'une section chaude de code de programme ;
l'optimisation de la section chaude du code de programme en vue de son exécution sur un cœur de processeur en service d'un processeur afin d'obtenir une section chaude optimisée du code de programme ; l'exécution du code de programme sur un cœur hors service du processeur ; et
l'exécution de la section chaude optimisée du code de programme sur le cœur de processeur en service, au lieu de l'exécution de la section chaude du code de programme sur le cœur de processeur hors service, en réponse au fait que le cœur hors service rencontre la section chaude du code de programme lors de l'exécution du code de programme sur le processeur hors service ; et
l'identification de la section chaude de code de programme,
la partie chaude du code étant identifiée par un motif de récurrence de la partie de code, et le procédé comprenant en outre :
l'optimisation, à l'aide d'un code d'optimisation, de la partie chaude du code de programme en vue de son exécution sur le cœur de processeur en service, le code d'optimisation devant être exécuté pour optimiser la partie chaude du code de programme en réponse à un matériel de surveillance identifiant la partie chaude du code de programme,
le code d'optimisation comprenant un microcode d'optimisation, et le microcode d'optimisation, lorsqu'il est exécuté pour optimiser la partie chaude du code de programme en vue de son exécution sur le cœur de processeur en service, comprenant : le microcode d'optimisation, lorsqu'il est exécuté, traduisant la partie chaude du code de programme depuis une première architecture de jeu d'instructions, ISA, reconnue par les décodeurs du cœur de processeur OOO vers une deuxième ISA reconnue par les décodeurs du cœur de processeur en service.

11. Procédé selon la revendication 10, comprenant en outre l'association de la section chaude du code de programme avec la section chaude optimisée du code de programme, en particulier :
la mémorisation d'une référence à la section chaude du code de programme et d'une référence à la section chaude optimisée dans une entrée d'un tableau de correspondance de code.

12. Procédé selon la revendication 10, l'identification d'une section chaude de code de programme comprenant :
la surveillance d'une mesure de performance pendant l'exécution d'une section du code de programme sur le cœur de processeur hors service,
l'identification de la section du code de programme comme étant la section chaude de code de programme sur la base de la mesure de performance par rapport à un seuil de performance, et l'indication que la section chaude de code de programme doit être exécutée avec le cœur hors service, au lieu que la section chaude optimisée du code de programme soit exécutée avec le cœur en service, en réponse au fait que la mesure de performance pendant l'exécution de la section chaude optimisée du code de programme avec le cœur de processeur en service indique une performance inférieure à la mesure de performance pendant l'exécution d'une section du code de programme avec le cœur de processeur hors service.

13. Procédé selon la revendication 10, l'optimisation de la section chaude du code de programme en vue de son exécution sur un cœur de processeur en service pour obtenir une section chaude optimisée du code de programme comprenant l'exécution d'un code de traduction binaire pour traduire le code de programme dans la section chaude optimisée du code de programme.

14. Support lisible par machine comprenant un code qui, lorsqu'il est exécuté par l'appareil selon l'une des revendications 1 à 9, amène l'appareil à réaliser le procédé selon l'une des revendications 10 à 13.
